Europäisches Patentamt

European Patent Office

Office européen des brevets

(19)

(11) Numéro de publication : **0 165 092 B1**

(12) **FASCICULE DE BREVET EUROPÉEN**

(45) Date de publication du fascicule du brevet :
17.08.88

(51) Int. Cl.⁴ : **B 01 J  8/24, F 23 C  11/02**

(21) Numéro de dépôt : **85400804.2**

(22) Date de dépôt : **24.04.85**

(54) **Injecteur de gaz de fluidisation à effet progressif pour lit fluidisé.**

(30) Priorité : **25.04.84 FR 8406490**

(43) Date de publication de la demande :
**18.12.85 Bulletin 85/51**

(45) Mention de la délivrance du brevet :
**17.08.88 Bulletin 88/33**

(84) Etats contractants désignés :
**AT BE CH DE GB IT LI LU NL SE**

(56) Documents cités :
**EP-A- 0 074 668**
**EP-A- 0 088 638**
**DE-A- 2 839 821**
**US-A- 4 343 247**
**CHEMICAL ABSTRACTS; vol. 98, no. 2, janvier 1983,**
**page 71, no. 5797y, Columbus, Ohio, US**

(73) Titulaire : **CHARBONNAGES DE FRANCE, Etablissement public dit:**
**Tour Albert 1er 65 avenue de Colmar**
**F-92507 Rueil Malmaison Cedex (FR)**

(72) Inventeur : **Delebarre, Arnaud**
**76 boulevard de la Liberté**
**F-59000 Lille (FR)**

(74) Mandataire : **Chevallier, Robert Marie Georges et al**
**Cabinet BOETTCHER 23, rue La Boétie**
**F-75008 Paris (FR)**

Jouve, 18, rue St-Denis, 75001 Paris, France

## Description

En outre l'injecteur apporté par l'invention doit pouvoir être installé en nombre élevé dans une même enceinte de fluidisation et permettre la mise à l'état fluidisé du lit inclus dans cette enceinte de manière progressive en sens vertical successivement dans des zones voisines.

On connaît par le document US-A-4 343 247 une enceinte de fluidisation dans laquelle des rangs de tubes horizontaux sont espacés en sens vertical à l'intérieur du lit de matière à fluidiser, chaque tube est percé de trous horizontaux dans la partie de sa longueur qui est plongée dans le lit. Chaque rang de tubes peut être alimenté sélectivement en gaz de fluidisation. Au moment du démarrage les tubes du rang le plus élevé sont alimentés en premier afin de provoquer le début de la fluidisation.

Selon un autre document EP-A-0 074 668, il existe dans un lit de matière à fluidiser, pour l'arrivée du gaz de fluidisation, plusieurs tubes verticaux dans lesquels chacun d'eux est composé de plusieurs tubes enfilés concentriquement les uns dans les autres avec leurs orifices respectifs ouverts dans des plans différents étagés en hauteur ; leur alimentation en gaz de fluidisation au moment du démarrage a lieu successivement dans l'ordre des niveaux des orifices du haut vers le bas.

Il est à noter que dans le premier cas il n'est pas possible d'alimenter indépendamment et successivement les tubes dont les orifices sont situés à un même niveau et que, dans le second cas, il est inévitable d'utiliser plusieurs conduits et plusieurs vannes distincts pour pouvoir alimenter séparément les orifices d'un même injecteur situés à des niveaux différents.

Un injecteur de fluidisation à plusieurs buses de soufflage espacées en sens vertical, conforme à l'invention, comprend au moins une conduite dressée ouverte à son extrémité supérieure et destinée à être alimentée par cette extrémité en gaz de fluidisation, cette conduite étant prévue pour s'étendre dans ladite enceinte entre le fond de celle-ci et le niveau supérieur de fluidisation et étant pourvue dans chacun de plusieurs plans espacés dans le sens de sa longueur et destinés à être étagés entre le niveau supérieur de fluidisation et le fond de l'enceinte, d'au moins une buse latérale de soufflage de gaz de fluidisation, cependant qu'un obturateur transversal mobile est monté déplaçable à l'intérieur de ladite conduite dans le sens longitudinal de celle-ci pour permettre la mise en communication successive, par rapport à l'arrivée de gaz de fluidisation, de la buse ou des buses situées dans les plans espacés à partir du plan le plus élevé.

L'invention a pour objet un injecteur de gaz de fluidisation dans un lit de matière à fluidiser grâce auquel on peut mettre progressivement ce lit à l'état fluidisé sans avoir à se servir d'une source d'air comprimé au moment du démarrage de la fluidisation ; il permet notamment de simplifier la commande de mise en marche d'une installation utilisant un lit fluidisé avec un tel injecteur.

Selon un mode de réalisation de l'invention, l'injecteur est constitué par une première conduite montée coaxialement à une seconde conduite ; l'une de ces conduites est raccordée par une extrémité à l'arrivée de gaz de fluidisation et l'autre conduite est pourvue dans des plans espacés d'une et de préférence de plusieurs buses latérales de soufflage s'ouvrant dans le lit de matière ; un obturateur transversal intérieur est monté déplaçable par exemple par coulissement en sens longitudinal dans la conduite munie des buses latérales.

Selon un autre mode de réalisation de l'invention, l'injecteur est constitué par une conduite raccordée à son extrémité supérieure à l'arrivée de gaz de fluidisation et elle est pourvue dans des plans espacés d'une et de préférence de plusieurs buses latérales de soufflage ; un obturateur transversal intérieur est monté déplaçable par exemple par coulissement en sens longitudinal dans cette conduite.

Dans une enceinte de fluidisation, quel qu'en soit l'usage par ailleurs, on peut monter plusieurs injecteurs conformes à l'invention, en nombre suffisant pour qu'ils assurent à eux seuls la totalité du soufflage nécessaire à la fluidisation ; on peut aussi monter quelques injecteurs seulement en combinant leur action à celle d'une grille de soufflage ; dans ce cas, les injecteurs ont pour rôle principal d'assurer le démarrage de la fluidisation sans qu'il soit obligatoire de souffler de l'air comprimé à pression élevée à travers la grille. L'invention couvre aussi toute enceinte de fluidisation pourvue d'au moins un injecteur tel que défini plus haut.

Dans certaines circonstances, l'injecteur utilisé a au moins une buse latérale de soufflage située à un niveau supérieur au plus haut niveau de fluidisation à l'intérieur de l'enceinte de fluidisation.

On donnera maintenant, sans intention limitative et sans exclure aucune variante, une description de plusieurs exemples de réalisation ; on se reportera aux dessins annexés dans lesquels :

— les figures 1 et 2 sont des dessins schématiques de deux variantes d'exécution selon un premier mode de réalisation de l'invention,

— la figure 3 est un dessin schématique d'un exemple d'exécution selon un deuxième mode de réalisation de l'invention,

— la figure 4 est une vue de dessus de l'injecteur de la figure 3, sans son moyen d'obturation mobile,

— la figure 5 est une représentation schématique d'une chaudière de combustion à lit fluidisé équipée d'injecteurs conformes au deuxième mode de réalisation de l'invention.

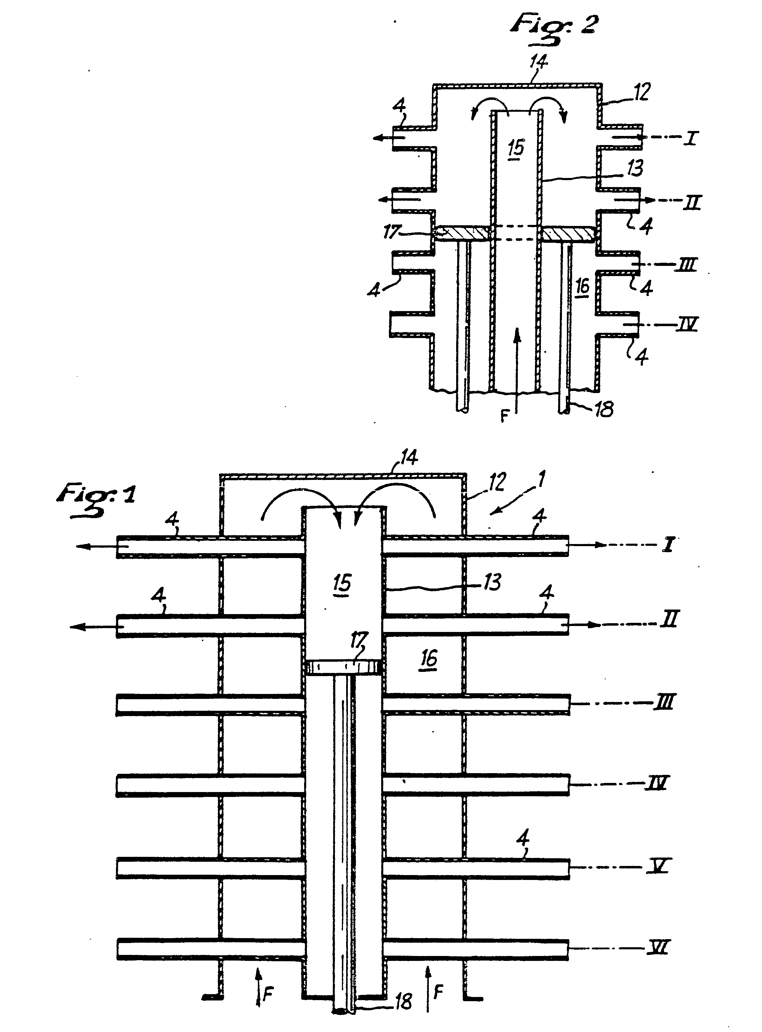

Dans l'exemple illustré par les figures 1 et 2, l'injecteur 1 est constitué par une première conduite 12 montée coaxialement à une seconde conduite 13 moins grosse contenue dans la première conduite 12. La conduite extérieure 12 est
fermée par un fond 14 à son extrémité et la
conduite intérieure 13 est ouverte et espacée du
fond 14 de sorte que le volume intérieur 15 de la
seconde conduite intérieure 13 est en communication avec le volume annulaire 16 qui existe
entre les deux conduites 12, 13.

Sur l'injecteur de la figure 1, des buses latérales 4 partent de la seconde conduite intérieure 13
et s'étendent au-delà de la première conduite
extérieure 12 jusque dans le lit fluidisé (non
représenté). Ces buses latérales 4 sont également
espacées dans le sens longitudinal des conduites
12, 13, dans des plans successifs étagés I, II, III, IV,
V, VI, indiqués par des traits mixtes. Dans chaque
plan, les buses latérales 4 sont espacées également en sens circonférentiel, mais elles sont
aussi, de préférence, décalées en sens circonférentiel, de 45° par exemple, entre les plans
successifs. Le diamètre des buses latérales 4 de
chaque plan est calculé de façon connue en soi,
en fonction de la perte de charge correspondante
du lit fluidisé et du débit de gaz à injecter.

Sur l'injecteur de la figure 2, les buses latérales
4 s'étendent à partir de la première conduite
extérieure 12, avec une disposition en plusieurs
plans successifs, comme expliqué ci-dessus.

Dans ces deux exemples, celle des conduites
qui n'est pas pourvue de buses latérales 4, donc
la conduite extérieure 12 sur la figure 1 et la
conduite intérieure 13 sur la figure 2, est raccordée par son extrémité inférieure à l'arrivée de gaz
de fluidisation, ainsi qu'on l'a suggéré par des
flèches F sur ces figures.

Dans les deux cas aussi le moyen de mise en
communication et d'isolation est constitué par un
obturateur transversal intérieur 17 monté coulissant dans le sens longitudinal dans la conduite
qui est pourvue de buses latérales 4. Dans le cas
de la figure 2, l'obturateur 17 est annulaire et il
coulisse aussi le long de la surface extérieure de
la conduite intérieure 13 qu'il entoure. Chaque
obturateur 17 est fixé à un organe de manœuvre
18 qui permet de lui donner des positions successives entre les plans I, II, III, etc... où se trouvent
les buses latérales 4.

Dans l'exemple de la figure 1, le gaz de fluidisation qui arrive dans la conduite extérieure 12
emprunte le canal annulaire 16, pénètre dans la
conduite intérieure 13 et sort par les buses
latérales 4 auxquelles la position de l'obturateur
17 lui permet d'accéder. Il en est de même dans
l'exemple de la figure 2 sauf que le gaz de
fluidisation arrive par la conduite intérieure 13
avant d'entrer dans la conduite extérieure 12 et,
de là, sortir par les buses latérales 4. On peut
constater que les buses latérales 4 du plan I le
plus élevé sont mises en service en premier, puis
on y ajoute ensuite, successivement, celles des
plans II, III, etc...

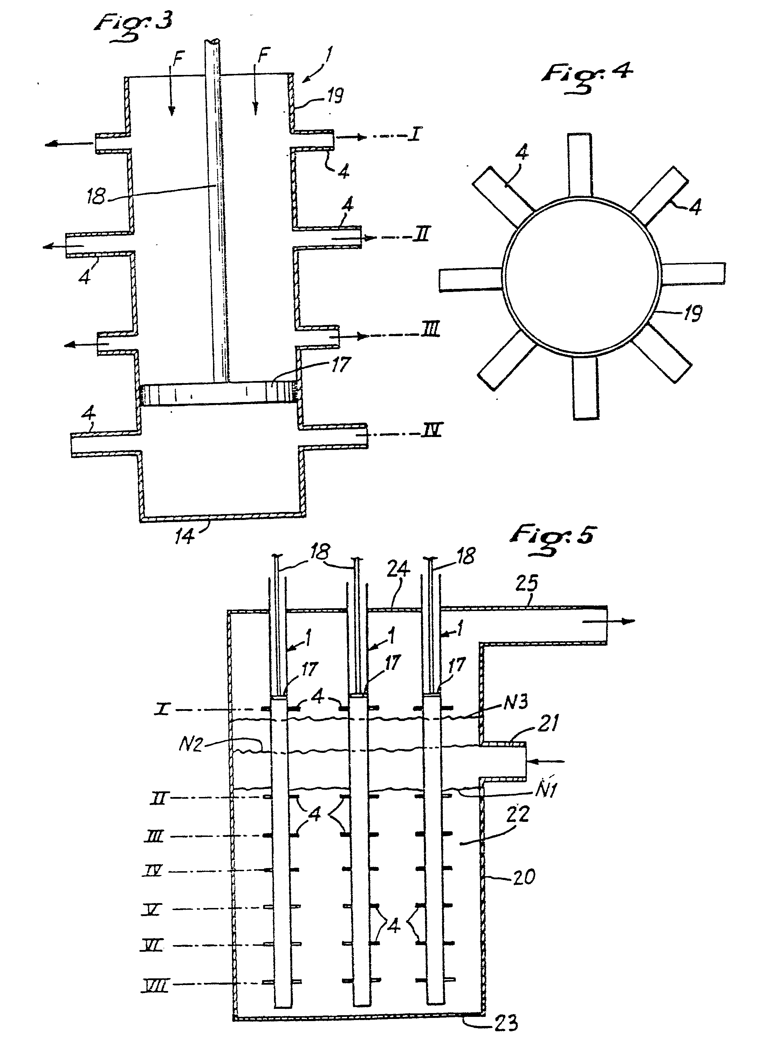

Dans l'exemple de réalisation illustré par la
figure 3, l'injecteur 1 est constitué par une seule
conduite dressée 19 à partir de laquelle s'étendent
des buses latérales 4 disposées comme expliqué précédemment dans des plans étagés I, II, III, IV.
Cette conduite 19 est fermée par un fond 14 à son
extrémité inférieure et elle est raccordée à l'arrivée de gaz de fluidisation, comme suggéré par
des flèches F, à son extrémité supérieure. Un
obturateur mobile 17 est déplaçable dans cette
conduite 19, à partir du haut, au moyen d'un
organe de manœuvre. Comme expliqué ci-dessus, il est possible de mettre en service toutes les
buses latérales 4 progressivement, en commençant par celles du plan I le plus élevé.

La figure 4 montre que les buses 4 sont régulièrement espacées circonférentiellement et, de préférence, déportées angulairement entre les plans
I, II, III, etc... successifs ainsi qu'on l'a déjà dit.

La figure 5 illustre un exemple d'utilisation de
l'injecteur 1 de l'invention. Il s'agit ici d'une
chaudière de combustion en lit fluidisé d'un
combustible en grains. Ce dernier arrive dans le
foyer 20 par une canalisation d'alimentation 21. A
l'arrêt, le combustible 22 occupe le volume disponible entre le fond 23 du foyer et un niveau
inférieur N1 qui est le niveau du lit au repos ;
quand il est fluidisé de manière incomplète, le lit
atteint un niveau plus élevé N2 ; à l'état de
fluidisation complète, le lit peut atteindre un
niveau N3 encore plus élevé. La canalisation
d'alimentation 21 débouche dans le foyer 20 au
niveau N1 ou au-dessus de ce dernier. A son
sommet, le foyer est fermé par une paroi supérieure 24 et un conduit 25 sert à l'évacuation des
fumées.

Dans ce foyer sont disposés plusieurs injecteurs
1 qui sont du type illustré par la figure 3 ; ces
injecteurs traversent donc la paroi supérieure 24
de sorte que les organes de manœuvre 18 des
obturateurs mobiles 17 sont accessibles à l'extérieur du foyer. Les injecteurs 1 s'étendent entre le
fond 23 du foyer jusqu'au-dessus du niveau N3 de
fluidisation complète. Les buses latérales 4 des
injecteurs 1 sont situées sur plusieurs plans
étagés I à VII indiqués par des traits mixtes de
sorte que les buses 4 des plans II à VII les moins
élevés sont noyées dans le lit au repos en-dessous du niveau N1 de ce dernier. Dans cet
exemple particulier, les buses 4 du plan I le plus
élevé se trouvent au-dessus du niveau N3 du lit à
l'état totalement fluidisé ; elles peuvent servir à
l'envoi d'air secondaire de combustion.

Quel que soit l'état dans lequel se trouve le lit,
même au repos, on peut le fluidiser sans utilisation d'air comprimé en mettant en service les
buses 4 situées dans le plan juste en dessous du
niveau atteint par le lit. Par exemple, à partir du lit
au repos, on met en service, en faisant descendre
les obturateurs 17, les buses de soufflage 4
situées dans les plans I, II ; les buses 4 du plan II
sont recouvertes par une faible couche du lit si
bien que le gaz qu'elles soufflent met facilement
cette couche en état de fluidisation ; la même
opération se produit successivement, à l'aide des
buses des plans III, puis IV, jusqu'à VII, pour la
fluidisation des couches qui les recouvrent.
Quand les obturateurs 17 de tous les injecteurs 1
atteignent leur position la plus basse, toutes les buses latérales 4 sont en service et le lit fluidisé atteint son niveau N3 le plus élevé.

Il est préférable de mettre les injecteurs 1 en position verticale, mais il est possible aussi de leur donner une inclinaison tant que celle-ci n'empêche pas de mettre les buses latérales 4 dans des plans étagés comme on l'a expliqué ; l'espacement de ces plans n'est pas nécessairement constant ; on peut être conduit dans certaines circonstances à prévoir un espacement différent des plans qui contiennent les buses de soufflage 4.

## Revendications

1. Injecteur pour la fluidisation entre un niveau inférieur et un niveau supérieur d'un lit de matière contenue dans une enceinte ayant un fond, avec plusieurs buses de soufflage espacées en sens vertical, caractérisé en ce qu'il comprend au moins une conduite dressée (15, 19) ouverte à son extrémité supérieure et destinée à être alimentée par cette extrémité en gaz de fluidisation, cette conduite (15, 19) étant prévue pour s'étendre dans ladite enceinte entre le fond de celle-ci et le niveau supérieur de fluidisation et étant pourvue dans chacun de plusieurs plans (I, II, III, ...) espacés dans le sens de sa longueur et destinés à être étagés entre le niveau supérieur de fluidisation et le fond de l'enceinte, d'au moins une buse latérale (4) de soufflage de gaz de fluidisation, cependant qu'un obturateur transversal mobile (17) est monté déplaçable à l'intérieur de ladite conduite (15, 19) dans le sens longitudinal de celle-ci pour permettre la mise en communication successive, par rapport à l'arrivée de gaz de fluidisation, de la buse (4) ou des buses (4) situées dans les plans espacés (I, II, III, ...) à partir du plan le plus élevé (I).

2. Injecteur selon la revendication 1 caractérisé en ce qu'il est constitué par une première conduite extérieure (12) obturée par un fond (14) à son extrémité supérieure, une seconde conduite (13) montée à l'intérieur de la première conduite (12) avec une extrémité supérieure ouverte n'atteignant pas le fond (14), l'une de ces conduites (12, 13) étant pourvue dans des plans étagés de buses latérales de soufflage (4) espacées circonférentiellement tandis que l'obturateur transversal mobile (17) à organe de manœuvre (18) est monté dans ladite conduite munie de buses latérales (4), la conduite dépourvue de buses de soufflage (4) étant raccordée à l'arrivée de gaz de fluidisation par son extrémité inférieure éloignée du fond (14).

3. Injecteur selon la revendication 2 caractérisé en ce que la conduite pourvue des buses latérales (4) est la seconde conduite intérieure (13), ces buses (4) s'étendant en dehors de la première conduite extérieure (12) à travers la paroi latérale de celle-ci.

4. Injecteur selon la revendication 2 caractérisé en ce que la conduite pourvue des buses latérales (4) est la première conduite extérieure (12), l'obturateur (17) étant annulaire et déplaçable le long des deux conduites (12, 13).

5. Injecteur selon la revendication 1 caractérisé en ce qu'il est constitué par une conduite (19) pourvue dans des plans espacés dans son sens longitudinal de buses latérales de soufflage (4) espacées circonférentiellement, obturée à son extrémité inférieure par un fond (14) et raccordée à son extrémité supérieure à l'arrivée de gaz de fluidisation, l'obturateur transversal mobile (17) à organe de manœuvre (18) étant monté dans ladite conduite (19).

6. Enceinte de fluidisation caractérisée en ce qu'elle est équipée d'au moins un injecteur selon l'une quelconque des revendications 1 à 5, les buses latérales (4) de ce ou de ces injecteurs (1) étant disposées dans des plans étagés (I, II, III, ...) entre le fond de ladite enceinte et le niveau (N3) de fluidisation complète de la matière contenue dans ladite enceinte.

7. Enceinte de fluidisation selon la revendication 6 caractérisée en ce que l'injecteur ou chaque injecteur (1) est pourvu d'au moins une buse (4) de soufflage située au-dessus du niveau (N3) du lit mis à l'état totalement fluidisé.

8. Enceinte de fluidisation destinée à la combustion d'un combustible en grains en présence d'air utilisé comme gaz de fluidisation, caractérisée en ce qu'elle est équipée d'au moins un injecteur selon l'une quelconque des revendications 1 à 5.

## Claims

1. An injector for fluidization between a lower level and a higher level of a bed of material contained in an enclosure having a bottom, provided with a plurality of blower nozzles spaced vertically in tiers, characterised in that it comprises at least one upright conduit (15, 19) which is open at its upper end and destined to be supplied with fluidization gas through that end, which conduit (15, 19) extends in the said enclosure between its bottom and the upper fluidization level and has at least one lateral fluidization gas blower nozzle (4) at each of several levels (I, II, III, ...) spaced over its length and arranged in tiers between the upper fluidization level and the bottom of the enclosure, and in that there is a transverse, movable, obturator (17) which is rendered displaceable within the said conduit (15, 19) in its longitudinal sense, so that the nozzle (4), or the nozzles (4), disposed at the spaced levels (I, II, III, ...) can be brought into successive communication with the fluidization gas supply, starting from the uppermost level (I).

2. The injector according to claim 1, characterised in that it consists of a first, outer, conduit (12) sealed at its upper extremity by an end piece (14), and a second conduit (13) arranged inside the first conduit (12) and having an open upper end which does not reach the end piece (14), one of these conduits (12, 13) being furnished at different levels with lateral blower nozzles (4) spaced circumferentially while the transverse, movable, obturator (17) having an actuating means (18) is installed in the said conduit that has lateral nozzles (4), and the conduit not provided with blower nozzles (4) is connected to the fluidization gas supply via its lower extremity remote from the end piece (14).

3. The injector according to claim 2, characterised in that the conduit provided with lateral nozzles (4) is the second, inner, conduit (13) and in that these nozzles (4) extend outward through the side wall of the first, outer, conduit (12).

4. The injector according to claim 2, characterised in that the conduit provided with lateral nozzles (4) is the first, outer, conduit (12) and in that the obturator (17) is annular and rendered displaceable along the two conduits (12, 13).

5. The injector according to claim 1, characterised in that it consists of a conduit (19) which is provided with lateral blower nozzles (4) at different levels of its length and spaced circumferentially, and which is sealed at its lower end by a bottom (14) and connected at its upper end to the fluidizatio gas supply, and in that the transverse, movable, obturator (17) having an actuating means (18) is arranged in the said conduit (19).

6. A fluidization enclosure, characterised in that it has at least one injector according to any one of claims 1 to 5 and in that the lateral nozzles (4) of this injector (1), or these injectors (1), are disposed in tiers at different levels (I, II, III, ...) between the bottom of the said enclosure and the level of complete fluidization (N3) of the material contained in the said enclosure.

7. The fluidization enclosure according to claim 6, characterised in that the injector (1), or each of the injectors (1), is provided with at least one blower nozzle (4) disposed above the level of complete fluidization (N3) of the bed.

8. A fluidization enclosure for the combustion of a granular fuel in the presence of air serving as fluidization gas, characterised in that it is equipped with at least one injector according to any one of claims 1 to 5.

**Patentansprüche**

1. Wirbelschichtinjektor, der zwischen einem unteren Niveau und einem oberen Niveau eines Stoffbettes angeordnet ist, das in einem mit Boden versehen Behälter vorliegt, und mit mehreren, in vertikaler Richtung in Abstand voneinander angeordneten Blasdüsen, dadurch gekennzeichnet, dass der Wirbelschichtinjektor mindestens eine aufgerichtete Leitung (15, 19) umfasst, die an ihrem oberen Ende offen ist und zur Zuführung eines Wirbelschichtgases über dieses Ende dient, dass sich die Leitung (15, 19) in dem Behälter zwischen dessen Boden und dem oberen Wirbelschichtniveau erstreckt und in mehreren Ebenen (I, II, III,...) angeordnet ist, die in Längsrichtung der Leitung im Abstand voneinander liegen und dazu bestimmt sind, zwischen dem oberen Wirbelschichtniveau und dem Boden des Behälters übereinander zu liegen, dass mindestens eine seitliche Blasdüse (4) für das Wirbelschichtgas vorhanden ist, während ein querliegendes, bewegliches Absperrelement (17) im Inneren der Leitung (15, 19) in deren Längsrichtung verschiebbar ist, um aufeinanderfolgend die Herstellung einer Verbindung, bezüglich des Anschlusses des Wirbelschichtgases, mit der Blasdüse (4) oder mit den Blasdüsen (4) zu gestatten, die in den in Abstand voneinander liegenden Ebenen (I, II, III,...) angeordnet sind, ausgehend von der am höchsten liegenden Ebene (I).

2. Wirbelschichtinjektor nach Anspruch 1, dadurch gekennzeichnet, dass er durch eine erste äussere Leitung (12) gebildet wird, die an ihrem oberen Ende durch einen Boden (14) abgesperrt ist, durch eine zweite, im Inneren der ersten Leitung (12) befestigte Leitung (13) mit einem oben offenen Ende, das nicht bis zum Boden (14) reicht, dass eine der Leitungen (12, 13) in den übereinanderliegenden Ebenen mit seitlichen Blasdüsen (4) ausgestattet ist, die umfangsseitig im Abstand voneinander liegen, während das querliegende, bewegliche Absperrorgan (17) mit einem Betätigungselement (18) in der mit den seitlichen Blasdüsen (4) versehenen Leitung befestigt ist, und dass die nicht mit den Blasdüsen (4) versehene Leitung an den Einlass des Wirbelschichtgases über ihr unteres, vom Boden (14) entferntes Ende angeschlossen ist.

3. Wirbelschichtinjektor nach Anspruch 2, dadurch gekennzeichnet, dass die mit den seitlichen Blasdüsen (4) versehene Leitung die zweite innere Leitung (13) ist, und dass sich die Blasdüsen (4) von der ersten äusseren Leitung (12) durch die Seitenwand derselben nach aussen erstrecken.

4. Wirbelschichtinjektor nach Anspruch 2, dadurch gekennzeichnet, dass die mit den seitlichen Blasdüsen (4) versehene Leitung die erste äussere Leitung (12) ist, und dass das Absperrorgan (17) ringförmig und längs der beiden Leitungen (12, 13) verschiebbar ist.

5. Wirbelschichtinjektor nach Anspruch 1, dadurch gekennzeichnet, dass er aus einer Leitung (19) besteht, die in Ebenen, die in Längsrichtung der Leitung im Abstand voneinander liegen, mit seitlichen Blasdüsen (4) versehen ist, die umfangsseitig im Abstand voneinander angeordnet sind, dass die Leitung an ihrem unteren Ende von einem Boden (14) abgeschlossen ist und an ihrem oberen Ende mit dem Wirbelschichtgasanschluss verbunden ist, und dass das querliegende, bewegliche Absperrorgan (17) mit dem Betätigungselement (18) in der Leitung (19) befestigt ist.

6. Wirbelschichtbehälter, dadurch gekennzeichnet, dass er mit mindestens einem Wirbelschichtinjektor nach einem der Ansprüche 1 bis 5 ausgestattet ist, dass die seitlichen Blasdüsen (4) des Wirbelschichtinjektors (1) oder der Wirbelschichtinjektoren in den übereinanderliegenden Ebenen (I, II, III, ...) zwischen dem Boden des Wirbelschichtbehälters und dem Abschlussniveau (N3) der Wirbelschicht des im Behälter enthaltenen Stoffs liegen.

7. Wirbelschichtbehälter nach Anspruch 7, dadurch gekennzeichnet, dass der Wirbelschichtinjektor oder jeder Wirbelschichtinjektor (1) mit mindestens einer Blasdüse (4) ausgestattet ist, die sich über dem Niveau (N3) des Bettes befindet, das sich in einem völligen Wirbelschichtzustand befindet.

8. Wirbelschichtbehälter zur Verbrennung eines als Schüttgut vorliegenden Brennstoffes in Anwesenheit von Luft, die als Wirbelschichtbildungsgas verwendet wird, dadurch gekennzeichnet, dass er mit mindestens einem Wirbelschichtinjektor nach einem der Ansprüche 1 bis 5 ausgestattet ist.

0 165 092

Fig. 2

Fig. 1

1

Fig. 3

Fig. 4

Fig. 5